Europäisches Patentamt

European Patent Office

Office européen des brevets

(19)

(11) Veröffentlichungsnummer : **0 136 473**
**B1**

(12)

# EUROPÄISCHE PATENTSCHRIFT

(45) Veröffentlichungstag der Patentschrift :
30.11.88

(21) Anmeldenummer : 84109296.8

(22) Anmeldetag : 06.08.84

(51) Int. Cl.⁴ : **F 16 K 31/06, G 05 D 7/06**

(54) Durch Elektromagnet betätigbares Steuerventil.

(30) Priorität : 08.08.83 US 520925

(43) Veröffentlichungstag der Anmeldung :
10.04.85 Patentblatt 85/15

(45) Bekanntmachung des Hinweises auf die Patenterteilung : 30.11.88 Patentblatt 88/48

(84) Benannte Vertragsstaaten :
AT BE CH DE FR GB IT LI NL SE

(56) Entgegenhaltungen :
DE-A- 2 808 962
DE-A- 2 809 701
US-A- 3 043 336
US-A- 3 071 147
US-A- 3 098 635
US-A- 3 420 260
US-A- 3 796 409
US-A- 3 893 471

(73) Patentinhaber : DEERE & COMPANY
1 John Deere Road
Moline Illinois 61265 (US)

(72) Erfinder : Kumar, Viraraghavan Sampath
613 Alpine Drive
Waterloo Iowa 50702 (US)
Erfinder : Olson, Rohn Lee
1024 Linbud Lane
Waterloo Iowa 50701 (US)

(74) Vertreter : Fricke, Joachim, Dr. et al
Dr. R. Döring, Dr. J. Fricke, Patentanwälte Josephspitalstrasse 7
D-8000 München 2 (DE)

## Beschreibung

Die Erfindung betrifft ein durch Elektromagnet betätigbares Steuerventil mit einem beweglichen hohlen Ventilglied, welches die Fluidverbindung durch eine Hauptöffnung zwischen Ventileinlaß und Ventilauslaß steuert, bei dem ein hohles Ankerglied zur Bewegung des Ventilgliedes und ein in diesem beweglicher Druckausgleichsstift 46 vorgesehen sind.

Ventile nach Art der Tellerventile sind üblicherweise eingesetzt als Einschalt- und Abschaltventile oder z. B. in Form von Rückschlagventilen zur Drucksteuerung. Schieberventile sind dagegen üblicherweise zur Präzisionssteuerung verwendet worden. Da tellerartige Ventile oder dgl. weniger empfindlich gegenüber Verschmutzung oder dgl. sind, ist es wünschenswert, derartige Ventile auch zu einer Präzisionssteuerung verwenden zu können.

Ein Beispiel für ein Steuerventil dieser Art ist in der US-A-3 893 471 beschrieben. Derartige Ventile besitzen einen druckausgleichenden Stift, der verwendet wird, um die Lastwirkungen auszuschalten, die aufgrund des Druckes auf das Steuerventil für die Hauptöffnung einwirken. Dadurch wird das Ventil unempfindlich gegenüber Lastveränderungen. Hierbei besteht jedoch der Nachteil, daß bei einem solchen Ventil dann, wenn der Elektromagnet abgeschaltet ist, ein Fluidleckweg vom Einlaß zum Auslaß zwischen dem Druckausgleichsstift und dem Anker besteht. Ein solches Auslecken ist akzeptabel, solange der Elektromagnet eingeschaltet und das Ventil offen ist. Wenn jedoch der Elektromagnet abgeschaltet wird, kann ein solcher Leckweg dazu führen, daß sich die Betätigungseinrichtung oder die Vorrichtung, welche durch das Ventil gesteuert wird, langsam aus ihrer Stellung herausbewegt. Es ist daher wünschenswert, ein Ventil der Art, wie es die US-A-3 893 471 zeigt, so weiterzubilden, daß ein solcher Leckweg dann, wenn das Ventil geschlossen ist, unterbunden ist.

Es ist Aufgabe der vorliegenden Erfindung ein Steuerventil mit den Merkmalen des Oberbegriffs so weiterzubilden, daß eine präzise Steuerung der Strömung zwischen Einlaß und Auslaß erreicht wird und bei geschlossenem Ventil jeder Leckweg unterbunden ist, wobei die Unempfindlichkeit des Steuerventils gegen Verunreinigungen im vollen Umfange aufrecht erhalten bleiben sollen.

Diese Aufgabe wird durch die Merkmale des Anspruchs 1 gelöst.

Der Leckweg ist bei dieser Anordnung frei, solange das Ventilglied sich in seiner Offenstellung befindet. Wird jedoch das Ventilglied in die Schließstellung bewegt, baut sich ein Druckdifferential auf, welches dafür sorgt, daß das Rückschlagventilglied sich so bewegt, daß es die Lecköffnung abdichtet und verschließt.

Vorteilhafterweise besitzt das Ventilglied einen hohlen zylindrischen Hülsenabschnitt, der einen Teil des Ankergliedes aufnimmt, wobei zwischen Ventilglied und Ankerglied eine Kammer eingeschlossen ist, in der sich das Rückschlagventil bewegt.

Vorteilhafterweise ist die Anordnung so getroffen, daß in Abhängigkeit von dem Einschalten des Elektromagneten das Rückschlagventilglied 62 sich zum Öffnen des Leckdurchganges bewegt, bevor das Ventilglied sich zum Öffnen der Hauptöffnung bewegt.

In einer zweckmäßigen Ausführungsform kann das Steuerventil einen Magnetkern aufweisen, der von dem Ankerglied durch einen ersten Arbeitsspalt getrennt ist, wenn die Hauptöffnung geschlossen ist, wobei das Rückschlagventilglied von dem Ankerglied durch einen zweiten Arbeitsspalt getrennt ist, wenn beide Öffnungen geschlossen sind, wobei der erste Spalt größer ist als der zweite Spalt. Hierdurch ergibt sich zwangsweise die gewünschte Bewegungsreihenfolge der beiden Glieder.

Die Erfindung wird nachfolgend anhand schematischer Zeichnungen an einem Ausführungsbeispiel näher erläutert.

Es zeigen :

Figur 1 einen Längsschnitt durch ein über Elektromagnet betätigbares Steuerventil gemäß der Erfindung und

Figur 2 eine Draufsicht auf einen Teil des Steuerventils nach Figur 1.

Das durch Elektromagnet betätigbare Steuerventil 10, welches eine Durchflußöffnung steuert, umfaßt eine Wicklung 12 und ein Gehäuse 14, welche ein Schließ- oder Ventilglied 16 und einen Anker 18 umgibt. Das Ventilglied 16 besteht vorzugsweise aus magnetisierbarem Stahl und weist einen hohlen Schaft 20 auf, der mit einem hohlen Hülsenabschnitt 22 durch eine radiale Wand 24 verbunden ist. Der Schaft 20 weist ein abgeschrägtes Ende 26 auf, welche mit einer Hauptöffnung 28 in einem Öffnungsglied 30 zusammenwirkt, um die Fluidströmung durch diese Öffnung zu steuern. Vorzugsweise ist ein Rohr 32 aus röstfreiem Stahl mit dem Ende des Hülsenabschnittes 22 verschweißt. Das Rohr 32 und der Abschnitt 22 weisen zwei axial verlaufende Schlitze 34 und 36 auf sich gegenüberliegenden Seiten auf, um eine Fuidströmung von der Einlaßkammer 38 zum oberen Ende des Ankers 18 über den Durchgang 39 und die Kammer 37 zu ermöglichen. Ankerunterstützungsringe 40 und 42 aus « Teflon » und « Glas » sind in Nuten angeordnet und wirken als Abstandselemente, um eine freie Bewegung des Rohres 32 und des Ventilgliedes 16 innerhalb einer nicht magnetischen Hülse 44 zu ermöglichen. Das hohle, aus magnetisierbarem Stahl bestehende Ankerglied 18 ist mit Preßsitz in dem Rohr 32 angeordnet. Ein Druckausgleichsstift 46 ist verschiebbar durch den Anker 18 aufgenommen. Die Lagerhülse 44 ist an der Außenfläche eines Polstückes 45 und an der Innenfläche des Gehäuses 14 festgeschweißt.

Die Einlaßkammer 38 nimmt Fluid von einer Pumpe 48 über ein Rückschlagventil 50 auf. Ein Auslaß 52 leitet das Fluid zu einer ausgangsseitigen Vorrichtung 54. Das Ventilglied 16, das Rohr 32 und der Anker 18 sind in einer Kammer 56 eingeschlossen. Ein Trenndurchgang oder eine Lecköffnung 58 erstreckt sich durch die Wand 24 des Ventilgliedes 16 und verbindet die Kammer 56 mit der Hauptöffnung 28 über Durchgang 60, der sich durch den Schaft 20 erstreckt.

Ein Trenn- oder Rückschlagventilglied 62 ist in der Kammer 56 angeordnet und weist eine konisch vorspringende oder abdichtende Stütze 64 auf, welche mit der Wand 24, welche den Durchgang 58 umgibt, in abdichtenden Eingriff tritt. Axial verlaufende Schlitze 66 in der Fläche des Rückschlagventilgliedes 62 verhindern einen Druckaufbau durch Begrenzung der freien Bewegung des Ventilgliedes 62 innerhalb der Kammer 56.

Wenn die Magnetspule 12 nicht eingeschaltet ist, wird die Hauptöffnung 28 durch das Ende 26 des Schaftes 20 geschlossen und der Durchgang 60 befindet sich auf niedrigem Druck. Zu der gleichen Zeit nimmt die Kammer 56 Leckfluid von der Einlaßkammer 38 über den Durchgang 39 in dem Öffnungsglied 30 und über die Schlitze 34 und 36 und von der Leckströmung zwischen dem Anker 18 und dem Stift 46 von höherem Druck auf. Der dadurch entstehende Druckunterschied veranlaß das Rückschlagventilglied 62 sich gemäß der Darstellung in der Figur nach unten zu bewegen, um den Leckdurchgang 58 abzudichten und eine Leckströmung aus dem Steuerventil 10 zu verhindern, wenn der Elektromagnet abgeschaltet ist. Es wird darauf hingewiesen, daß ein sich axial erstreckender Spalt 68 das Rückschlagventilglied 62 von dem Anker 18 trennt. Ein weiterer Spalt 70 trennt den Anker 18 von dem magnetischen Polstück 45 des Elektromagneten. Vorzugsweise sind die verschiedenen Komponenten des gezeigten Steuerventil so konstruiert, daß dann, wenn der Elektromagnet 12 nicht eingeschaltet ist, der Spalt 70 größer ist als der Spalt 68. Wenn also der Elektromagnet 12 eingeschaltet wird, wird das Rückschlagventilglied 62 angezogen, um den Leckdurchgang 58 zu öffnen, und zwar bevor die Hauptöffnung 28 geöffnet wird. Auf diese Weise wird die Verbindung zwischen der Kammer 56 und der Hauptöffnung 28 freigegeben, um eine Leckströmung um den Druckausgleichsstift 46 zu ermöglichen, so daß der Stift 46 ordnungsgemäß funktionieren kann, wenn das Steuerventil 10 geöffnet ist.

## Patentansprüche

1. Durch Elektromagnet betätigbares Steuerventil (10) mit einem beweglichen hohlen Ventilglied, welches die Fluidverbindung durch eine Hauptöffnung (28) zwischen Ventileinlaß und Ventilauslaß steuert, bei dem ein hohles Ankerglied (18) zur Bewegung des Ventilgliedes (16) und ein in diesem beweglicher Druckausgleichsstift (46) vorgesehen sind und bei dem das Ventilglied (16) eine Lecköffnung (58) aufweist, die sich auf der von der Hauptöffnung (28) abgewandten Seite durch das Ventilglied erstreckt, dadurch gekennzeichnet, daß ein in Abhängigkeit vom Druckdifferential zwischen Einlaß und Auslaß bewegliches Rückschlagventil (62) vorgesehen ist, welches die Fluidströmung durch die Lecköffnung (58) sperrt, um die Fluidströmung zwischen Einlaß (38) und Auslaß (52) zu verhindern, wenn das Ventilglied (16) eine Fluidströmung durch die Hauptöffnung (28) unterbindet, und daß das Rückschlagventil (62) die Verbindung zwischen Einlaß und Auslaß über die Lecköffnung freigibt, wenn das Ventilglied (16) den Fluidstrom durch die Hauptöffnung zuläßt.

2. Steuerventil nach Anspruch 1, dadurch gekennzeichnet, daß das Ventilglied (16) einen hohlen zylindrischen Hülsenabschnitt (22) zur Aufnahme eines Abschnittes des Ankergliedes (18) aufweist und Ventilglied und Ankerglied eine Kammer (56) begrenzen, in der das Rückschlagventil (62) bewegbar ist.

3. Steuerventil nach Anspruch 2, dadurch gekennzeichnet, daß in Abhängigkeit von der Einhaltung des Elektromagneten (12) das Rückschlagventilglied (62) sich bewegt, um die Lecköffnung (58) zu öffnen, bevor das Ventilglied (16) sich zum Öffnen der Hauptöffnung (28) bewegt.

4. Steuerventil nach Anspruch 1, dadurch gekennzeichnet, daß ein Magnetkernelement (45) von dem Ankerglied (18) durch einen ersten Spalt (70) getrennt ist, wenn die Hauptöffnung (28) geschlossen ist, und daß das Rückschlagventilelement (62) von dem Ankerglied (18) durch einen zweiten Spalt (68) getrennt ist, wenn beide Öffnungen (28) und (58) geschlossen sind, wobei der erste Spalt (70) größer als der zweite Spalt (68) ist.

5. Ventil nach Anspruch 1, dadurch gekennzeichnet, daß das Rückschlagventil (62) einen zylindrischen Körper aufweist, der durch das Ventilglied verschiebbar abgenommen ist, daß der Körper eine Ausnehmung zur Aufnahme eines Abschnittes des Druckausgleichsstiftes (46) sowie eine Nut in einer Fläche aufweist, um eine Fluidverbindung zwischen dem Rückschlagventilkörper und dem Ventilglied (16) herzustellen.

6. Ventil nach Anspruch 5, dadurch gekennzeichnet, daß das Rückschlagventil (62) einen sich axial erstreckenden Vorsprung (64) aufweist, der durch die Lecköffnung (58) aufgenommen ist und gegen den Ventilkörper (16) abdichtet, wenn das Rückschlagventil (62) die Lecköffnung (58) blockiert.

## Claims

1. Control valve (10) operable by an electromagnet, with a movable hollow valve member, which controls the fluid connection through a main opening (28) between valve inlet and valve outlet, in which there are provided a hollow armature member (18) for moving the valve member (16) and a pressure equalising rod (46) movable therein, and in which the valve member (16) has a bleed opening (58) which extends through the valve member on the side away from the main opening (28), characterized in that there is provided a non-return valve (62) movable in dependence on the pressure differential between inlet and outlet, which blocks the fluid flow through the bleed opening (58), in order to prevent the fluid flow between inlet (38) and outlet (52) when the valve member (16) prevents a fluid flow through the main opening (28), and in that the non-return valve (62) opens the connection between inlet and outlet through the bleed opening when the valve member (16) permits the fluid flow through the main opening.

2. Control valve according to claim 1, characterized in that the valve member (16) has a hollow cylindrical shell section (22) for receiving a section of the armature member (18) and valve member and armature member define a chamber (56) in which the non-return valve (62) is movable.

3. Control valve according to claim 2, characterized in that in dependence upon the observance of the electromagnet (12) the non-return valve member (62) moves to open the bleed opening (58) before the valve member (16) moves to open the main opening (28).

4. Control valve according to claim 1, characterized in that a magnetic core element (45) is separated by a first gap (70) from the armature member (18) when the main opening (28) is closed and in that the non-return valve element (62) is separated from the armature element (18) by a second gap (68) when both openings (28) and (58) are closed, the first gap (70) being larger than the second gap (68).

5. Valve according to claim 1, characterized in that the non-return valve (62) has a cylindrical body which is slidably received through the valve member, in that the body has a recess for receiving a section of the pressure equalising rod (46), in order to form a fluid connection between the non-return valve body and the valve member (16).

6. Valve according to claim 5, characterized in that the non-return valve (62) has an axially extending projection (64) which is received by the bleed opening (58) and seals against the valve member (16), when the non-return valve blocks the bleed opening (58).

**Revendications**

1. Vanne-pilote (10) à commande électromagnétique, comportant un obturateur creux mobile qui commande la communication fluidique par un orifice principal (28) entre l'entrée et la sortie de la vanne, où une armature creuse (18) destinée au déplacement de l'obturateur (16) et une tige d'égalisation de pression (46) mobile dans celle-ci sont prévues, et où l'obturateur (16) comporte un orifice de fuite (58) qui s'étend à travers l'obturateur du côté opposé à l'orifice principal (28), caractérisée en ce qu'il est prévu un clapet de retenue (62) mobile en fonction de la différence de pression entre l'entrée et la sortie, qui bloque l'écoulement de fluide à travers l'orifice de fuite (58) pour empêcher l'écoulement de fluide entre l'entrée (38) et la sortie (52) lorsque l'obturateur (16) empêche un écoulement de fluide par l'orifice principal (28), et en ce que le clapet de retenue (62) permet la communication entre l'entrée et la sortie par l'intermédiaire de l'orifice de fuite lorsque l'obturateur (16) autorise l'écoulement de fluide par l'orifice principal.

2. Vanne-pilote selon la revendication 1, caractérisée en ce que l'obturateur (16) comporte une section de manchon cylindrique creuse (22) pour la réception d'une section de l'armature (18), et l'obturateur et l'armature délimitent une chambre (56) dans laquelle le clapet de retenue (62) est mobile.

3. Vanne-pilote selon la revendication 2, caractérisée en ce qu'en fonction de la mise en circuit de l'électro-aimant (12), le clapet de retenue (62) se déplace pour ouvrir l'orifice de fuite (58) avant que l'obturateur (16) se déplace pour ouvrir l'orifice principal (28).

4. Vanne-pilote selon la revendication 1, caractérisée en ce qu'un noyau magnétique (45) est séparé de l'armature (18) par un premier interstice (70), lorsque l'orifice principal (28) est fermé, et en ce que le clapet de retenue (62) est séparé de l'armature (18) par un second interstice (68) lorsque les deux orifices (28) et (58) sont fermés, le premier interstice (70) étant plus grand que le second interstice (68).

5. Vanne selon la revendication 1, caractérisée en ce que le clapet de retenue (62) comporte un corps cylindrique qui est reçu de façon à pouvoir se déplacer par l'obturateur, en ce que ce corps comporte un évidement pour recevoir une section de la tige d'égalisation de pression (46), ainsi qu'une rainure dans une surface pour réaliser une communication fluidique entre le corps du clapet de retenue et l'obturateur (16).

6. Vanne selon la revendication 5, caractérisée en ce que le clapet de retenue (62) comporte une saillie (64) s'étendant axialement qui est reçue par l'orifice de fuite (58) et est en contact étanche avec l'obturateur (16) lorsque le clapet de retenue (62) obture l'orifice de fuite (58).